# EUROPEAN PATENT SPECIFICATION

(11) **EP 3 797 504 B1**
(45) Date of publication and mention of the grant of the patent: **15.02.2023**
(21) Application number: 19753280.7
(22) Date of filing: 31.07.2019
(51) Int. Cl.: H04L 9/40, G06F 21/62, G06F 21/60, G06F 16/182, G06Q 20/06, G06Q 20/12, G06Q 20/40, H04L 9/08, H04L 9/00, H04L 9/32

(54) **DATA EXCHANGE PLATFORM USING BLOCKCHAIN**
DATENAUSTAUSCHPLATTFORM MIT BLOCKCHAIN
PLATEFORME D'ÉCHANGE DE DONNÉES À L'AIDE D'UNE CHAÎNE DE BLOCS

(30) Priority: 15.08.2018 US 201862764918 P; 30.07.2019 US 201916525628
(43) Date of publication of application: 31.03.2021
(73) Proprietor: NEC Corporation, Tokyo 108-8001 (JP)
(72) Inventor: KARAME, Ghassan, 69115 Heidelberg (DE); GARCIA GALVAO ALMEIDA, Miguel, 10407 Berlin (DE)
(74) Representative: Ullrich & Naumann PartG mbB
(86) International application number: PCT/EP2019/070712
(87) International publication number: WO 2020/035320

(56) References cited:
- WO-A1-2018/019364
- US-A1- 2018 191 714
- HUBERT RITZDORF ET AL: "Towards Shared Ownership in the Cloud", IACR, INTERNATIONAL ASSOCIATION FOR CRYPTOLOGIC RESEARCH, vol. 20170309:102132, 5 March 2017 (2017-03-05), pages 1-14, XP061022934, [retrieved on 2017-03-05]

## Description

### FIELD

The present invention relates to the application of blockchain technology to establish and operate a secure and transparent data exchange platform.

### BACKGROUND

Data has been becoming increasingly more valuable. At the same time, there has been an increasing amount of data being exchanged between different parties. Depending on the scenario, these parties may or may not know each other, and many times cannot trust each other. In addition, there is a demand from society, both companies and individuals, for increased privacy and accountability for those that do not sufficiently safeguard data or adhere to established rules (e.g., penalties for data leaks).

WO 2018/019364 A1 discloses methods for controlling access to a shared resource for a plurality of users who collaboratively uses a resource R hosted within the cloud with the goal to ensure fair access to the shared cloud-based resource. A blockchain aware policy decision point PDP of the cloud performs access control decisions based on the results of smartcontracts executed within the blockchain, wherein the smartcontracts own the shared cloud-based resource.

The document H. Ritzdorf et al.: "Towards Shared Ownership in the Cloud", IACR, vol. 20170309:102132, 5 March 2017, pages 1-14, addresses the problem of distributed enforcement of shared ownership within cloud storage providers. The document provides a solution called Comrade that leverages functionality from blockchains and smartcontracts. In Comrade, cloud accounts are not owned by a single user, but by a smartcontract that is running within a blockchain.

US 2018/0191714 A1 discloses a blockchain enabled operating environment in which a service device, e.g. a hardware component, is controlled by performing an exchange on the blockchain. For instance, a user device can lock/unlock a service device (e.g. a door) by interfacing with a smartcontract stored on the blockchain, for instance after having made a respective payment also handled via the blockchain.

### SUMMARY

The invention is defined by the appended claims. Advantageous embodiments thereof are defined in the respective dependent claims.

In an embodiment, the present invention provides a method for exchanging data using a blockchain network. The method includes uploading, by a data producer computer entity, the data to a plurality of cloud servers and committing the data to the blockchain network. An offer for the data is created on the blockchain network. Payment is received, by the data producer computer entity, from a data consumer after the offer has been accepted. Smartcontracts are implemented in the blockchain network to verify possession of the data, to settle the offer against the payment and to change an access control list (ACL) such that the data on the cloud servers is accessible by the data consumer. At least one of the smartcontracts, to verify the possession of the data, connects to the cloud servers to check for an owner of the data, the ACL of the data stored on the cloud servers and a hash of the data.

### BRIEF DESCRIPTION OF THE DRAWINGS

The present invention will be described in even greater detail below based on the exemplary figures. The invention is not limited to the exemplary embodiments. All features described and/or illustrated herein can be used alone or combined in different combinations in embodiments of the invention. The features and advantages of various embodiments of the present invention will become apparent by reading the following detailed description with reference to the attached drawings which illustrate the following:
FIG. 1 schematically illustrates a current method of using a blockchain network to pay for goods;
FIG. 2 schematically illustrates a method according to an embodiment of the present invention for exchanging data using a blockchain network; and
FIG. 3 schematically illustrates a data exchange platform and the computer implementation of a method according to an embodiment of the present invention for exchanging data using a blockchain network.

### DETAILED DESCRIPTION

Embodiments of the present invention provide a data exchange platform that relies on blockchain technology and cloud computing to provide privacy and security. Embodiments of the present invention provide functions allowing to create and regulate such a data exchange platform, as well as a process to regulate the data exchange over the blockchain by using all or nothing encryption in a keyless deterministic way.

According to an embodiment of the present invention, a paradigm (for example, an Internet of Things (IoT) environment) is provided for where there are data producers (e.g. companies or users that own smart devices) and data consumers (e.g. companies that engage in big data analytics or artificial intelligence). The data producers are able to generate value by selling their data. The data consumers can bid on data that is relevant to them. It is possible to act as both a data producer and consumer.

Furthermore, according to an embodiment of the present invention, the data producers are able to keep their data private and secure, even from very strong adversaries such as governments or rogue cloud providers, and are preferably also able to provide specific and revocable access to their data. Moreover, the participants in the blockchain network have sufficient assurance that the data exists and that who is selling it is the actual owner.

In order to achieve this paradigm, embodiments of the present invention create an environment where data can be exchanged, traced, and where access policies can be enforced while keeping the whole process transparent to all the participants, so anyone can verify whether the rules are being followed or not. At the same time, embodiments of the present invention keep the data private to all but the authorized parties.

In particular, the inventors have recognized that blockchain by its nature provides a good setting to achieve the aforementioned environment as it is generally used as a distributed ledger, tracking transactions that happen amongst its participants. Additionally, the inventors have recognized that blockchain allows for the remote execution of computer programs, and in particular smartcontracts, that can be used to manage and regulate the market. These smartcontracts can enforce rules and automatically take punitive actions against those infringing them.

In order to enable the use of blockchain to provide for the secure and transparent exchange of data, and especially larger amounts of data, embodiments of the present invention also provide for adaptations to be made to the blockchain in order to make the solution more ideal. These adaptations in particular advantageously recognize, address and solve problems which have inhibited blockchain use for data exchange. These problems include:
1. It is very inefficient and expensive to send large amounts of data over the blockchain, but without doing so there is currently no technical solution that allows the blockchain to keep track of who owns the data.
2. Committing data into the blockchain will make it permanently available to all the participants on the network, and there will be no way of either a) revoking the access or b) deleting the data.
3. Without committing data into the blockchain there is currently no technical way for the blockchain (and therefore all the peers therein) to have proof that whoever is trying to sell data has ownership. Also, once the transaction is completed, the recipient has access to the data.
4. Key management (to manage access to encrypted files) is usually a very arduous task in that it is burdensome on computer resources and requires detailed security measures, careful design and trusted authorities for issuing and revoking them.

According to embodiments of the present invention, technical adaptations are applied to the blockchain to provide technical solutions that address and solve these problems, thus allowing for the efficient exchange of data between entities, or delivery of data from the data producer to the data consumer, while still maintaining blockchain traceability, as well as cryptographical proof that the data consumer got the data, and that the data producer is authorized to distribute the data and/or actually owns what it is selling.

In an embodiment, the present invention provides a method for exchanging data using a blockchain network which includes uploading the data to a plurality of cloud servers and committing the data to the blockchain network. An offer for the data is created on the blockchain network. Payment is received from a data consumer after the offer has been accepted. Smartcontracts are implemented in the blockchain network to verify possession of the data, to settle the offer against the payment and to change an access control list (ACL) such that the data on the cloud servers is accessible by the data consumer.

In the same or other embodiment, the data uploaded to the cloud servers is encrypted by an all or nothing transform (AONT).

In the same or other embodiment, one or more cloud providers of the cloud servers operate or subscribe to at least one blockchain node of the blockchain network such that the one or more cloud providers are notified to make the change to the ACL.

In the same or other embodiment, the smartcontracts are further used to facilitate the creation and acceptance of the offer for the data.

In the same or other embodiment, at least one of the smartcontracts specifies, in the creation of the offer, a public key of a data producer which uploaded the data to the cloud servers, a description of the data, a price of the data and an offer identification.

In the same or other embodiment, at least one of the smartcontracts enables cancellation of the offer for the data prior to the offer being accepted.

In the same or other embodiment, at least one of the smartcontracts, to verify the possession of the data, connects to the cloud servers to check for an owner of the data, the ACL of the data stored on the cloud servers and a hash of the data.

In the same or other embodiment, at least one of the smartcontracts continuously or periodically checks that the ACL of the data stored on the cloud servers matches permissions for the data stored in the blockchain network.

In the same or other embodiment, the payment is an IOU payment.

In another embodiment, the present invention provides data exchange platform. The data exchange platform includes a blockchain network comprising a plurality of computer nodes and storing data which has been committed to the blockchain network by a data producer who has also uploaded the data to a plurality of cloud servers; and smartcontracts implemented in the blockchain network to create an offer for the data, to accept the offer for the data, to generate a payment for the data, to verify possession of the data, to settle the offer against the payment and to change an access control list (ACL) such that the data on the cloud servers is accessible by a data consumer who has accepted the offer for the data.

In the same or other embodiment, at least one of the smartcontracts specifies, in the creation of the offer, a public key of a data producer which uploaded the data to the cloud servers, a description of the data, a price of the data and an offer identification.

In the same or other embodiment, at least one of the smartcontracts enables cancellation of the offer for the data prior to the offer being accepted.

In the same or other embodiment, at least one of the smartcontracts, to verify the possession of the data, connects to the cloud servers to check for an owner of the data, the ACL of the data stored on the cloud servers and a hash of the data.

In the same or other embodiment, at least one of the smartcontracts continuously or periodically checks that the ACL of the data stored on the cloud servers matches permissions for the data stored in the blockchain network.

In a further embodiment, the present invention provides a non-tangible, computer-readable medium containing instructions which, upon execution by one or more processors with access to memory, provides for execution of a method for exchanging data using a blockchain network. The method includes uploading the data to a plurality of cloud servers and committing the data to the blockchain network. An offer for the data is created on the blockchain network. Payment is received from a data consumer after the offer has been accepted. Smartcontracts are implemented in the blockchain network to verify possession of the data, to settle the offer against the payment and to change an access control list (ACL) such that the data on the cloud servers is accessible by the data consumer.

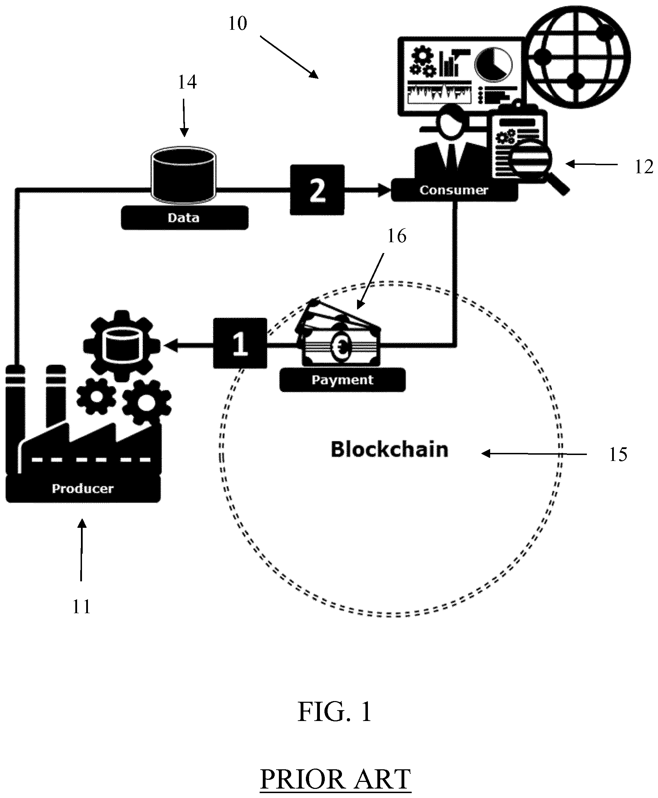

FIG. 1 shows a current system 10 in which goods, such as data 14, can be exchanged between a producer 11 and a consumer 12 using a blockchain network 15 for electronic payment 16. Specifically, as indicated by block [1] in FIG. 1, the electronic payments 16 (e.g., a ledger of debt) are tracked and agreed upon on the blockchain network 15; and as indicated by the block [2] in FIG. 1, the goods, such as the data 14, are transferred via a side channel with no real options for traceability from the blockchain network 15. Thus, while the blockchain network 15 can be used for electronic payments16, and allows those electronic payments 16 to be verified and stored, the transfer of goods, such as the data, is separate from the blockchain network 15 and therefore lacks the security and traceability of the electronic payments 16. Moreover, the blockchain network 15 cannot verify that the producer 11 actually owns the goods and the consumer 12 actually received the goods.

An alternative to FIG. 1 could be a scenario where both the data 14 and the electronic payment 16 are transferred via the blockchain network 15. However, this would bloat and overload the blockchain network 15 since blockchain technology is not optimized to transfer huge amounts of data. Moreover, there would be a lack of security and privacy since the data available to every blockchain node in the blockchain network.

Embodiments of the present invention advantageously allow for the exchange of data using blockchain while maintaining security and privacy and not overloading the blockchain network. In particular, blockchain smartcontracts are utilized to transparently coordinate data exchanges on a data exchange platform operable as a marketplace that has all of its functionality implemented inside the blockchain itself. Encryption using an all or nothing transform (AONT) is utilized in order to keep the data secure and private while avoiding having to do key management.

Embodiments of the present invention involve the following entities/components and their functionality:
- Data producer: An entity (e.g. user, computer, server) that generates and/or distributes data.
- Data consumer: An entity (e.g. user, computer, server) that uses data, either to provided services or to post-process to add additional value (e.g. machine learning).
- Data: Digital information.
- Blockchain: A growing and shared list of digital records (ledger) on a blockchain network (comprising computing entities acting as blockchain nodes) that are cryptographically linked, wherein consensus among computing nodes has to be achieved for entries to be added.
- Payment: The trade value given by the consumer to the producer (e.g. digital currency, debt token, etc.) for the data.
- Smartcontract: A computer program (code) that handles the business logic which was pre-agreed by the network members. This code is available (i.e. can be inspected) to all the members present on the network (i.e. producers and consumers).
- All or nothing transform (AONT) encryption: A mathematical function that is hard to reverse except if all the outputs are known (i.e. it only allows to retrieve all the data - partial retrievals are not possible). This transform can be further enhanced with the encryption of a set or subset of its outputs. In an embodiment, an AONT encryption scheme referred to herein as Bastion and discussed in U.S. Patent No. 9,787,469 can be advantageously applied as discussed below.

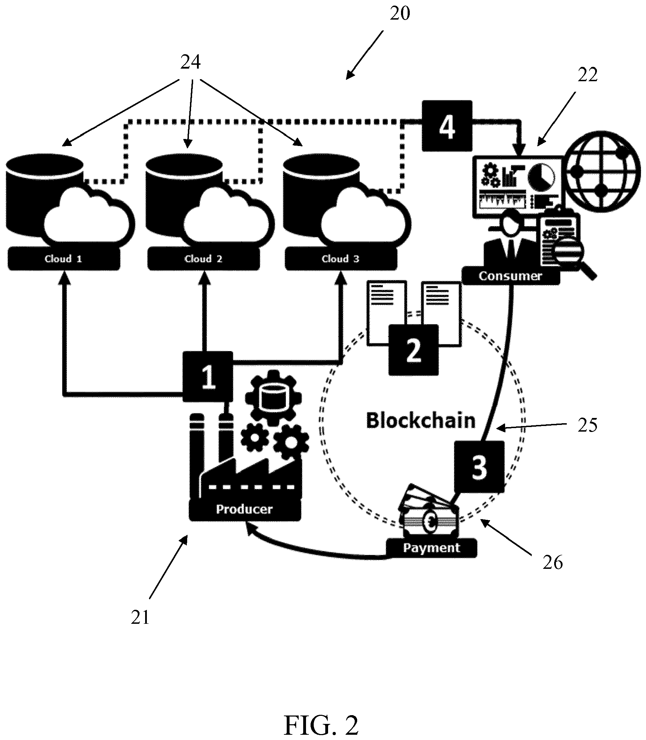

FIG. 2 schematically illustrates a system 20 according to an embodiment of the present invention which include two main phases (setup and trading), the setup phase occurs at the blocks [1] and [2], and the data exchange phase occurs at the blocks [2], [3] and [4]. A data producer 21 uploads data to the cloud. Preferably, to enhance security of the data, the data producer 21 applies AONT encryption and stores the data distributed among a plurality of cloud servers 24. Smartcontracts 28 are implemented in the blockchain network 25 to adapt it for the secure, traceable and transparent exchange of data tied to the electronic payment 26. Additionally, the smartcontracts 28 provide to ensure that an access control list (ACL) for the data on the cloud servers 24 matches an ACL of the blockchain network which is changed to add the data consumer 22 after the data consumer has paid for the data, and the blockchain network 25 has reached consensus on the electronic payment 26.

In the following, different functions are described which can be used to achieve the solution according to embodiments of the present invention. These functions include:
- Upload files: A function called by the data producers 21 which includes the steps of encrypting the data using AONT and uploading the output files to multiple cloud servers 24, which may be run by the same or preferably different cloud providers.
- Cloud Blockchain ACL: A function that the cloud providers run which includes the steps of establishing a subscription to a blockchain node, preferably multiple blockchain nodes to provide resilience, to allow the cloud servers 24 to be notified about changes to the permissions for the data in the blockchain after acceptance of an offer, and so that those changes are enacted on their ACLs. It is also possible that the cloud providers run their own blockchain node and therefore avoid the subscription.

### Function 1 - Bastion: All or Nothing Encryption:

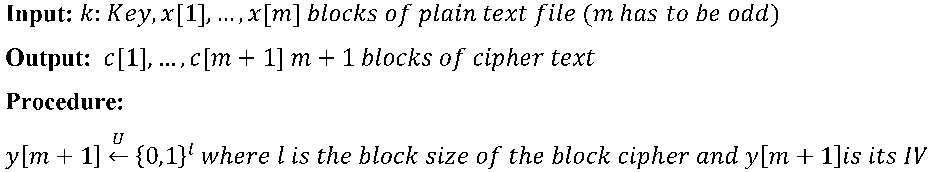

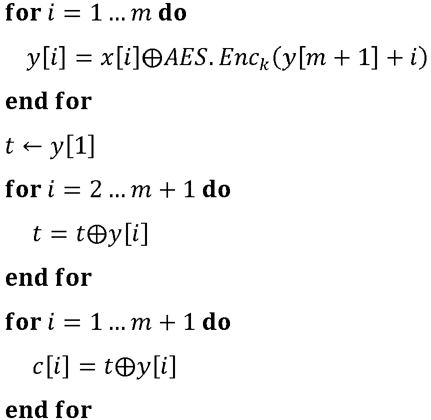

### Function 2 - Bastion: Decryption:

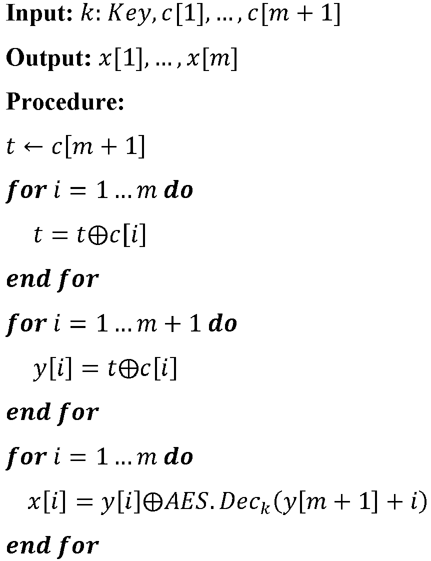

As previously stated, embodiments of the present invention provide for the implementation of base functions that allow to operate a digital data marketplace using the blockchain network 25. To achieve this, smartcontracts 28 are deployed to implement the following functionalities:
- Verify Data: In order to be able to transfer or sell data, the blockchain has to verify, to a certain degree of confidence, that the data producer 21 possesses the data. This is done by a smartcontract 28 that connects to the cloud provider(s) of the cloud servers 24 and checks the file ownership, file ACL and file hash. This provides sufficient proof of data possession. Because it is run by a smartcontract 28, the result of its execution can be trusted.
- Offer Create: This function involves the steps of generating an offer for data and placing it on the blockchain network 25. Generating the offer includes specifying the public key of the data producer 21, a description of the data being sold, the price for the data and an identifier. The offer is only submitted to the blockchain network 25 when it has been validated successfully (e.g., the smartcontract for verifying the data ran successfully). This type of transaction will be mainly used by data producers 21.
- Cancel Offer: The cancel offer function allows the owner of a valid, not yet expired, offer to cancel it. Upon calling the cancel offer function, the offer is deemed cancelled and is no longer available for acceptance in the blockchain network 25.
- Accept Offer: This function is called to accept an existing offer which has not been cancelled. This type of transaction will be mainly used by data consumers 22.

Setup phase at blocks [1] and [2] in FIG. 2: In order to begin trading, the data producer 21 upload its data to multiple cloud servers 24. The data is first run through AONT encryption and is padded if needed, by adding some additional bits to ensure that the size is a multiple of 128 bits. In this way it is assured that the data will consist of multiple files and that they will be securely stored across multiple cloud servers 24. A major benefit of using AONT encryption is it provides security while avoiding the cumbersome process of key management. For this, Function 5 - Upload Files (see below) is used which includes calls to Function 1 - Bastion: All or Nothing Encryption (see above). The cloud servers 24 can either run a blockchain node or subscribe to multiple nodes in order to fetch the permissions/ACL for the files it is hosting. In this manner, ACL or permission changes made on the blockchain network 25 through the acceptance of offers will be mimicked in the ACL for the files in the cloud servers 24. For example, the cloud providers receive notifications from the blockchain node(s) they run or subscribe to about changes for permissions for data and adjust their ACLs for the files containing the data accordingly. The user is also added to the blockchain by calling the function add_user from Function 6 - Smartcontract Setup (see below). Afterwards, the data producer 21 then commits the data, which that entity has uploaded, to the blockchain, which is done by evoking add_data from Function 6 - Smartcontract Setup. This will, by calling verify_data validate that the data was provided correctly, that the data producer 21 has ownership over it, and that the ACL is valid.

Data exchange phase at blocks [2], [3] and [4] in FIG. 2: When trading a data producer 21 can sell data that it owns by calling offer_create, likewise it is also possible for the data producer 21 to cancel the offer by calling offer_cancel from Function 7 - Smartcontract Trading (see below). A data consumer 22 can search for data offers by using the functionalities in Function 7 - Smartcontract Trading and look for details using Function 8 - Smartcontract Get Details (see below). The data consumer 22 can accept offers by using offer_accept from Function 7 - Smartcontract Trading. Throughout the whole process verify_data from Function 6 - Smartcontract Setup is run to challenge the cloud providers and verify that the cloud servers 24 are keeping their ACL honest with the blockchain. When an offer is successfully accepted there will be a payment, which is an IOU payment according to a preferred embodiment, created between the seller and the buyer. In addition, the ACL of the blockchain network 25 will be changed to reflect it. IOUs are unique to the pair (data producer 21 and data consumer 22) involved with the exchange and will track all the transactions between them. The data consumer 22 can then have access to the data by downloading all the files (they are able to since they are already on the ACL of the cloud servers 24 after the changes implemented through the respective functions implemented in the blockchain network 25).

### Function 3 - Data Structures:

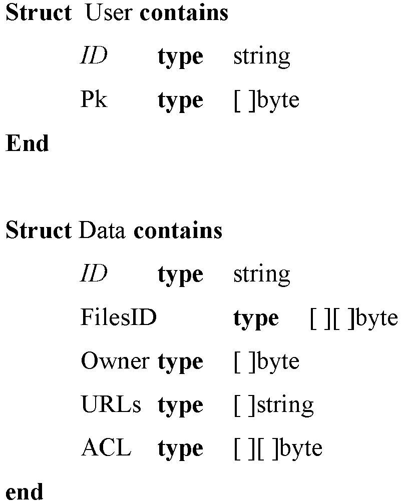

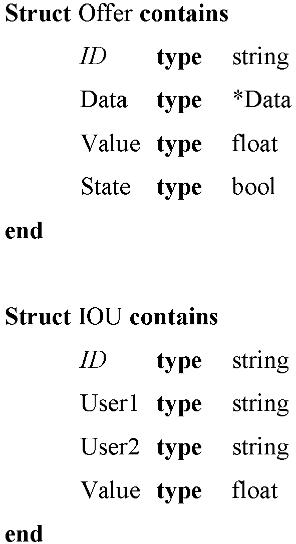

### Function 4 - Cloud Blockchain Node for ACL:

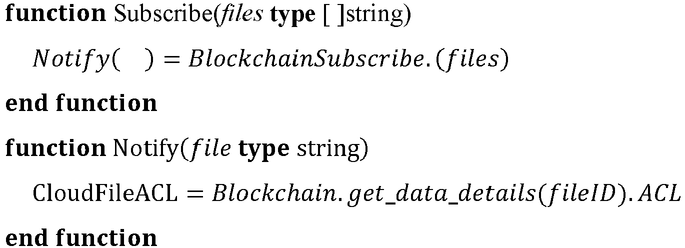

### Function 5 - Upload Files:

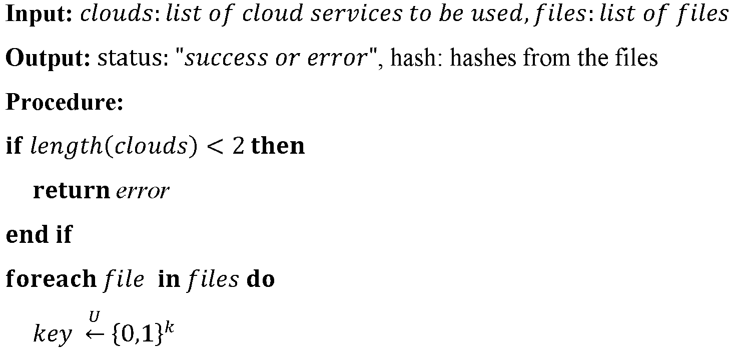

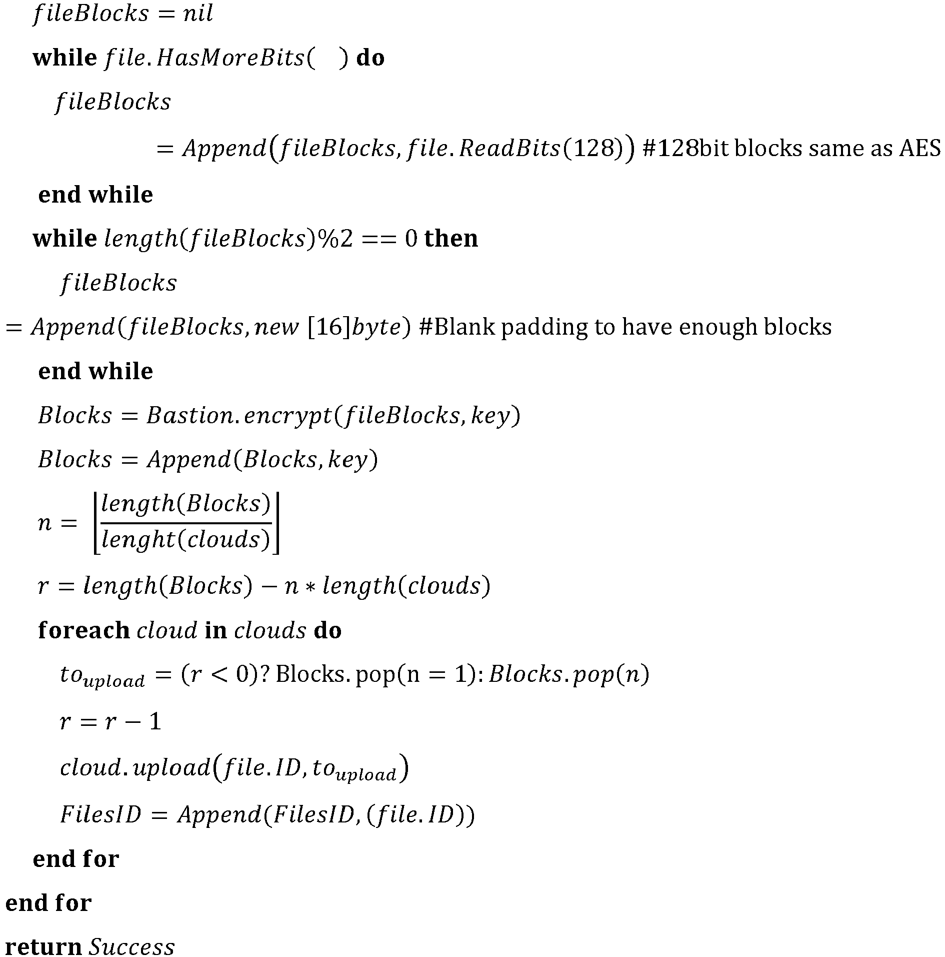

### Function 6 - Smartcontract Setup:

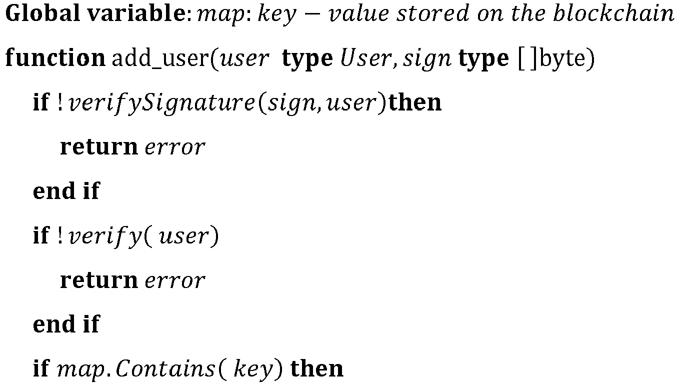

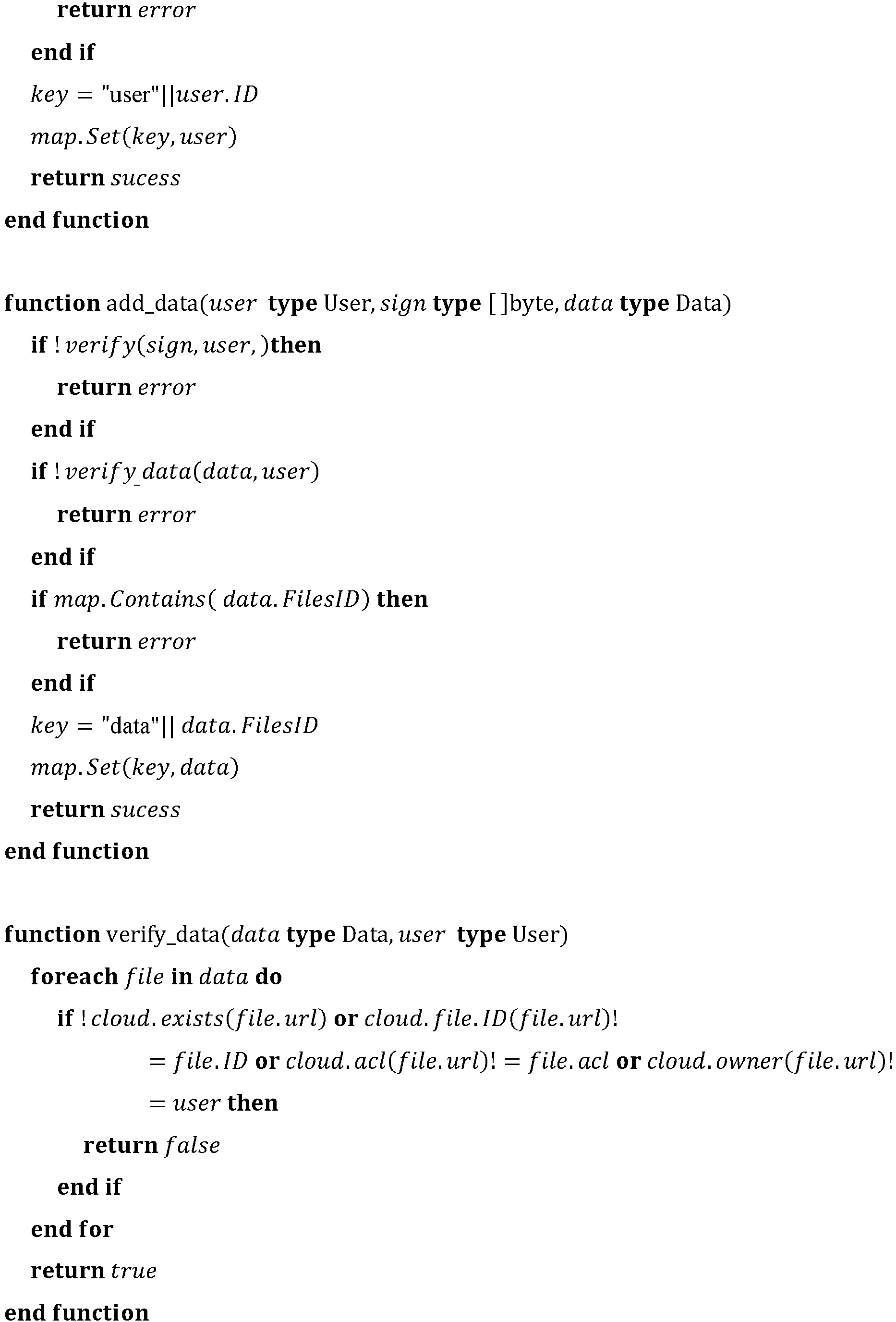

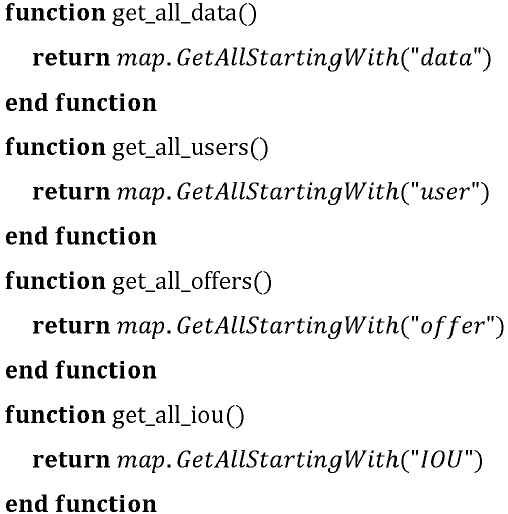

### Function 7 - Smartcontract Trading:

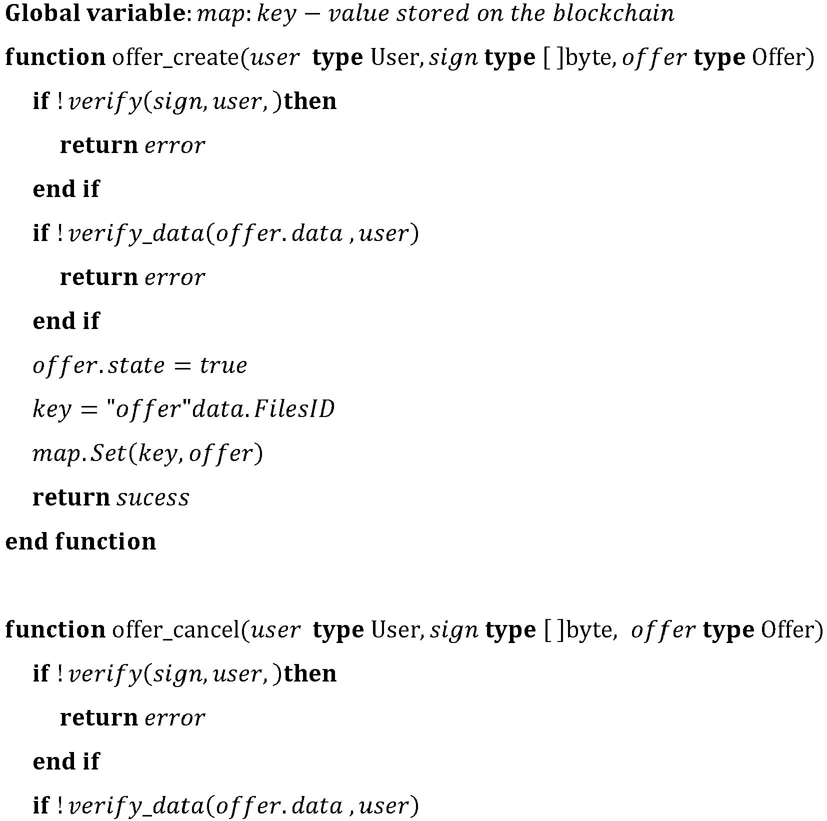

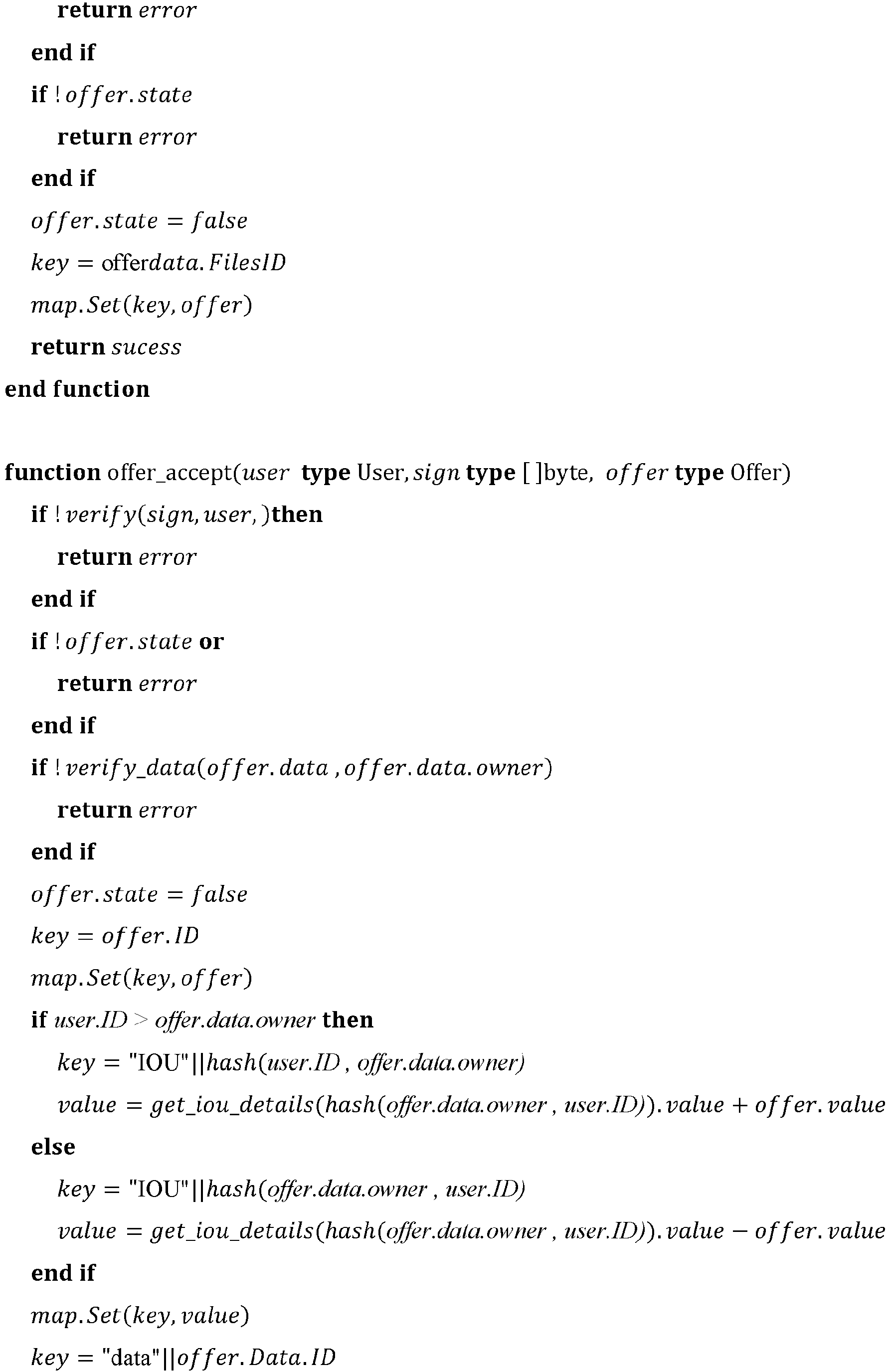

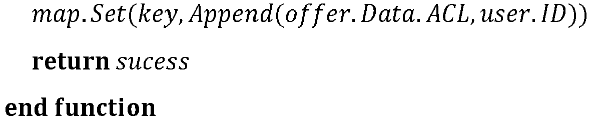

### Function 8 - Smartcontract Get Details:

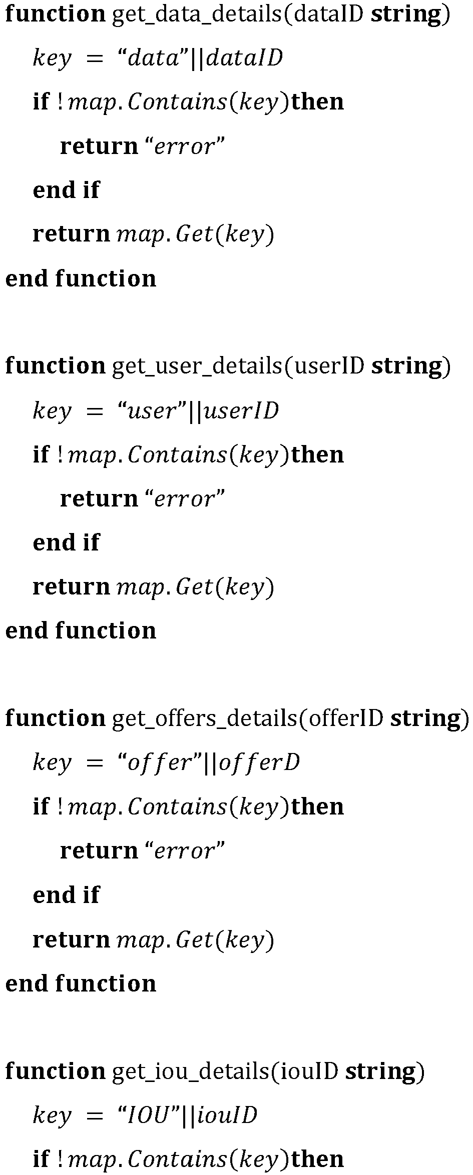

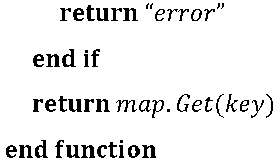

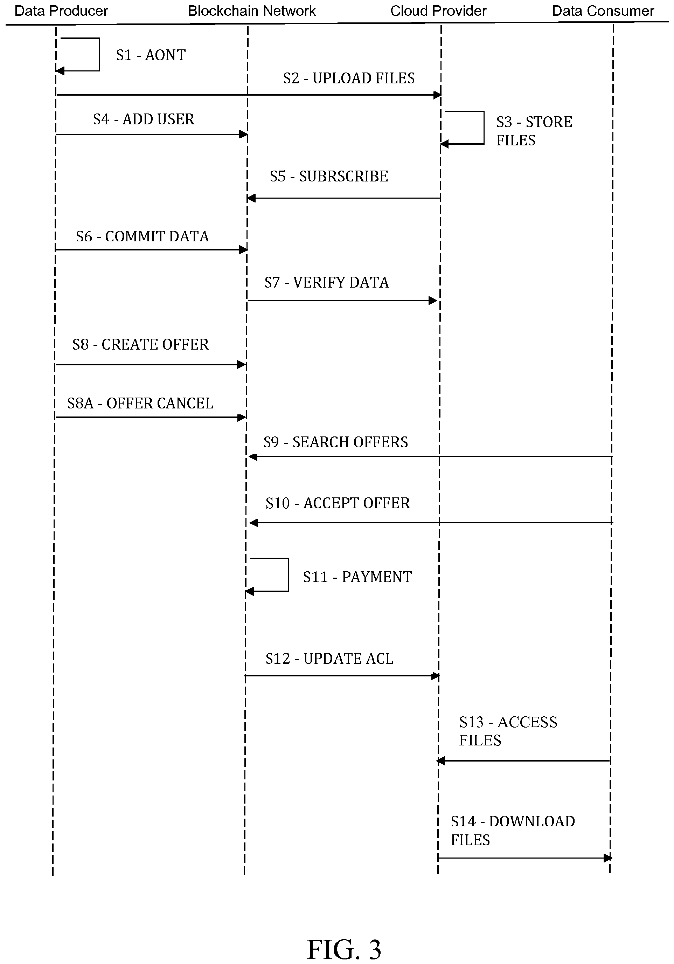

FIG. 3 illustrates different computer entities, each comprising non-volatile physical memory and one or more computer processors, involved with the data exchange platform, and a method for data exchange. Unless one of the steps S1-S14 requires the performance of one or more of the other steps prior to its execution, the steps can be performed at different times and orders than that shown in FIG. 3.

In a step S1, the data producer encrypts the data it would like to transfer, preferably using AONT, and uploads the files output from the AONT to multiple cloud servers from one or more cloud providers in a step S2 for distributed storage on the cloud servers in a step S3. In a step S4, the data producer registers with the blockchain network, in case this has not been done already. In a step S5, the cloud provider subscribes to one or more of the blockchain nodes, which are computer entities which run the blockchain, if this has not been done already, or itself runs one or more blockchain nodes. In a step S7, the verify data function is called by the blockchain network implementing the corresponding smartcontract described above to verify possession of the data. Preferably, the verify data function is run continuously or periodically in regular intervals to ensure that the cloud provider is keeping its ACL consistent with the blockchain. Once successfully verified by execution of the smartcontract for verifying the data, an offer for the data can be generated in step S8 by implementing the corresponding smartcontract described above. Optionally, prior to acceptance, the offer can be cancelled in a step S8A, using the corresponding smartcontract described above. In a step S9, a data consumer can search details of the offer stored in the blockchain network, and can call the function for accepting the offer in step S10, wherein each of these steps S9 and S10 are likewise implemented using the corresponding smartcontracts described above. In a step S11, the blockchain network creates a payment on the ledger, preferably an IOU payment which will track all other transactions between the data producer and the data consumer, once the blockchain network reaches consensus on the payment. In a step S12, a node of the blockchain network requests the cloud provider to change the ACL for the files containing the data to add the data consumer and the ACL, for example, by calling the verify data function as in step S7 and/or sending a notification to the cloud providers by virtue of the subscription. Since the data consumer is now on the ACL for the files, the data consumer can access the files in a step S13 and download them in a step S14. Since AONT encryption is used, the data can be decrypted once the data consumer has access to the files.

Another solution would be to use asymmetric keys so that the data producer encrypts the data in the cloud servers using the public key of the data consumer. Thus, when the data consumer gets added to the ACL, that consumer (and that consumer alone) will have all the means to access the data. This solution is more naive than the one presented previously as it will require much more storage capacity on the cloud (1 file instance per consumer), as well as to go through the hurdle of key management.

Another solution would be to not use encryption. In this case, the cloud provider is trusted and the ACL is used to manage access to the files. This solution is really naïve and requires a lot of trust in the cloud provider.

Such a naive approach is very inefficient and expensive (sending large amounts of data over the blockchain), it also lacks privacy (committing data into the blockchain will make it permanently available to all the participants on the network), and has no access control (once data is committed there is no chance of a) revoking the access or b) deleting it). If data is not committed and a disconnected side-channel is used to share it there is no technical way that the peers have proof of a) who owns the data, b) who can retrieve it, and c) who has accessed or retrieved the data. Thus, the naive approach would come at a huge bandwidth and communication cost compared to embodiments of the present invention. Moreover, in contrast to embodiments of the present invention, the data is not secured, private or verifiable using a naive approach.

Embodiments of the present invention provide for the following improvements:
1) Coordinating data exchange transparently in the blockchain by means of smartcontracts that orchestrate in a keyless deterministic fashion access to the AONT-encrypted data on the cloud.
2) Constructing and operating a data exchange platform, e.g., as a digital data marketplace, on the blockchain network by means of smartcontracts used to carry out specific transactions such as offer_create, offer_cancel and IOU payments.

According to an embodiment, a method for exchanging data using a blockchain network as a data exchange platform comprises the steps of:
1) Producer uploads data to multiple clouds.
2) Producer commits the data to the blockchain.
3) Smartcontract validates proof of possession.
4) Use smartcontracts to create a data offer on the network.
5) Consumer accepts an offer for data on the blockchain.
6) Use smartcontract to settle offers against IOU payments.
7) Use smartcontract to change the cloud ACL of the data.
8) Consumer gets access to the data.

In an embodiment, a method run by one or more cloud providers for exchanging data using a blockchain network comprises:
1) Receiving data, preferably encrypted by AONT and distributed among multiple files.
2) Storing the files on multiple cloud servers.
3) Subscribing to or operating one or more blockchain nodes.
4) Receiving calls from the blockchain network to verify possession of the data and that the ACL for the files matches with what is stored in the blockchain network, wherein the ACL is updated upon being changed in the blockchain network to include a data consumer that has accepted an offer for the data and paid for it using the blockchain network.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for exchanging data using a blockchain network (25), the method comprising:
uploading, by a data producer computer entity (21), the data to a plurality of cloud servers (24);
committing, by the data producer computer entity (21), the data to the blockchain network (25);
creating, by the data producer computer entity (21), an offer for the data on the blockchain network (25); and
receiving, by the data producer computer entity (21), a payment (26) from a data consumer computer entity (22) after the offer has been accepted by said data consumer computer entity (22),
wherein smartcontracts (28) are implemented in the blockchain network (25) to verify possession of the data, to settle the offer against the payment (26) and to change an access control list, ACL, such that the data on the cloud servers (24) is accessible by the data consumer computer entity (22),
wherein at least one of the smartcontracts (28), to verify the possession of the data, connects to the cloud servers (24) to check for an owner of the data, the ACL of the data stored on the cloud servers (24) and a hash of the data; and
wherein the data producer computer entity (21) and the data consumer computer entity (22) are members of the blockchain network (25).

2. The method according to claim 1, wherein the data uploaded to the cloud servers (24) is encrypted by an all or nothing transform, AONT.

3. The method according to claim 1 or 2, wherein one or more cloud providers of the cloud servers (24) operate or subscribe to at least one blockchain node of the blockchain network (25) such that the one or more cloud providers are notified to make the change to the ACL.

4. The method according to any of claims 1 to 3, wherein the smartcontracts (28) are further used to facilitate the creation and acceptance of the offer for the data.

5. The method according to any of claims 1 to 4, wherein at least one of the smartcontracts (28) specifies, in the creation of the offer, a public key of a data producer which uploaded the data to the cloud servers (24), a description of the data, a price of the data and an offer identification.

6. The method according to any of claims 1 to 5, wherein at least one of the smartcontracts (28) enables cancellation of the offer for the data prior to the offer being accepted.

7. The method according to any of claims 1 to 6, wherein at least one of the smartcontracts (28) continuously or periodically checks that the ACL of the data stored on the cloud servers (24) matches permissions for the data stored in the blockchain network (25).

8. The method according to any of claims 1 to 7, wherein the payment is an IOU payment.

9. A data exchange system comprising:
a blockchain network (25) comprising a plurality of computer nodes adapted to store data which has been committed to the blockchain network (25) by a data producer computer entity (2) adapted to also upload the data to a plurality of cloud servers (24) and further adapted to create an offer for the data on the blockchain network (25) and to receive a payment (26) from a data consumer computer entity (22) after the offer has been accepted by said data consumer computer entity (22);
wherein the data producer computer entity (21) and the data consumer computer entity (22) are members of the blockchain network (25); and
smartcontracts (28) implemented in the blockchain network (25) to verify possession of the data, to settle the offer against the payment (26) and to change an access control list (ACL) such that the data on the cloud servers (24) is accessible by the data consumer computer entity (22), wherein at least one of the smartcontracts (28), to verify the possession of the data, connects to the cloud servers (24) to check for an owner of the data, the ACL of the data stored on the cloud servers (24) and a hash of the data.

10. The data exchange system (20) according to claim 9, wherein at least one of the smartcontracts (28) specifies, in the creation of the offer, a public key of a data producer computer entity (21) which uploaded the data to the cloud servers (24), a description of the data, a price of the data and an offer identification.

11. The data exchange system (20) according to claim 9 or 10, wherein at least one of the smartcontracts (28) enables cancellation of the offer for the data prior to the offer being accepted.

12. The data exchange system (20) according to any of claims 9 to 11, wherein at least one of the smartcontracts (28) continuously or periodically checks that the ACL of the data stored on the cloud servers (24) matches permissions for the data stored in the blockchain network (25).

13. A non-tangible, computer-readable medium containing instructions which, upon execution by a plurality of processors with access to memory, provides for execution of a method according to claim 1.

## Patentansprüche

1. Verfahren zum Austausch von Daten unter Verwendung eines Blockchain-Netzwerks (25), wobei das Verfahren folgendes umfasst:
Hochladen der Daten auf eine Vielzahl von Cloud-Servern (24) durch eine Datenerzeuger-Computereinheit (21);
Übergeben der Daten an das Blockchain-Netzwerk (25) durch die Datenerzeuger-Computereinheit (21);
Erstellen eines Angebots für die Daten im Blockchain-Netzwerk (25) durch die Datenerzeuger-Computereinheit (21); und
Empfangen einer Zahlung (26) von einer Datenkonsumenten-Computereinheit (22) durch die Datenerzeuger-Computereinheit (21), nachdem das Angebot von der Datenkonsumenten-Computereinheit (22) angenommen wurde,
wobei Smart-Contracts (28) in dem Blockchain-Netzwerk (25) implementiert sind, um den Besitz der Daten zu verifizieren, das Angebot mit der Zahlung (26) zu verrechnen und eine Zugriffskontrollliste, ACL, zu ändern, so dass die Daten auf den Cloud-Servern (24) für die Datenkonsumenten-Computereinheit (22) zugänglich sind,
wobei mindestens einer der Smart-Contracts (28), um den Besitz der Daten zu verifizieren, eine Verbindung zu den Cloud-Servern (24) herstellt, um einen Inhaber der Daten, die ACL der auf den Cloud-Servern (24) gespeicherten Daten und einen Hash der Daten zu überprüfen; und
wobei die Datenerzeuger-Computereinheit (21) und die Datenkonsumenten-Computereinheit (22) Mitglieder des Blockchain-Netzwerks (25) sind.

2. Verfahren nach Anspruch 1, wobei die auf die Cloud-Server (24) hochgeladenen Daten durch eine Alles-oder-Nichts-Transformation (AONT) verschlüsselt werden.

3. Verfahren nach Anspruch 1 oder 2, wobei ein oder mehrere Cloud-Provider der Cloud-Server (24) mindestens einen Blockchain-Knoten des Blockchain-Netzwerks (25) betreiben oder abonnieren, so dass der eine oder die mehreren Cloud-Provider benachrichtigt werden, um die Änderung an der ACL vorzunehmen.

4. Verfahren nach einem der Ansprüche 1 bis 3, wobei die Smart-Contracts (28) ferner dazu verwendet werden, die Erstellung und Annahme des Angebots für die Daten zu erleichtern.

5. Verfahren nach einem der Ansprüche 1 bis 4, wobei mindestens einer der Smart-Contracts (28) bei der Erstellung des Angebots einen öffentlichen Schlüssel eines Datenerzeugers, der die Daten auf die Cloud-Server (24) hochgeladen hat, eine Beschreibung der Daten, einen Preis der Daten und eine Angebotskennung angibt.

6. Verfahren nach einem der Ansprüche 1 bis 5, wobei mindestens einer der Smart-Contracts (28) eine Stornierung des Angebots für die Daten ermöglicht, bevor das Angebot angenommen wird.

7. Verfahren nach einem der Ansprüche 1 bis 6, wobei mindestens einer der Smart-Contracts (28) kontinuierlich oder periodisch prüft, dass die ACL der auf den Cloud-Servern (24) gespeicherten Daten mit den Berechtigungen für die in dem Blockchain-Netzwerk (25) gespeicherten Daten übereinstimmt.

8. Verfahren nach einem der Ansprüche 1 bis 7, wobei die Zahlung eine IOU-Zahlung ist.

9. Datenaustauschsystem, umfassend:
ein Blockchain-Netzwerk (25), das eine Vielzahl von Computerknoten umfasst, die eingerichtet sind, Daten zu speichern, die dem Blockchain-Netzwerk (25) von einer Datenerzeuger-Computereinheit (21) übergeben wurden, wobei die Datenerzeuger-Computereinheit (21) eingerichtet ist, die Daten auch auf eine Vielzahl von Cloud-Servern (24) hochzuladen und des Weiteren eingerichtet ist, ein Angebot für die Daten auf dem Blockchain-Netzwerk (25) zu erstellen und eine Zahlung (26) von einer Datenkonsumenten-Computereinheit (22) zu erhalten, nachdem das Angebot von der Datenkonsumenten-Computereinheit (22) akzeptiert wurde;
wobei die Datenerzeuger-Computereinheit (21) und die Datenkonsumenten-Computereinheit (22) Mitglieder des Blockchain-Netzwerks (25) sind; und
Smart-Contracts (28), die in dem Blockchain-Netzwerk (25) implementiert sind, um den Besitz der Daten zu verifizieren, das Angebot mit der Zahlung (26) zu verrechnen und eine Zugriffskontrollliste (ACL) zu ändern, so dass die Daten auf den Cloud-Servern (24) für die Datenkonsumenten-Computereinheit (22) zugänglich sind, wobei mindestens einer der Smart-Contracts (28), um den Besitz der Daten zu verifizieren, eine Verbindung zu den Cloud-Servern (24) herstellt, um einen Inhaber der Daten, die ACL der auf den Cloud-Servern (24) gespeicherten Daten und einen Hash der Daten zu überprüfen.

10. Datenaustauschsystem (20) nach Anspruch 9, wobei mindestens einer der Smart-Contracts (28) bei der Erstellung des Angebots einen öffentlichen Schlüssel einer Datenerzeuger-Computereinheit (21), die die Daten auf die Cloud-Server (24) hochgeladen hat, eine Beschreibung der Daten, einen Preis der Daten und eine Angebotskennung angibt.

11. Datenaustauschsystem (20) nach Anspruch 9 oder 10, wobei mindestens einer der Smart-Contracts (28) eine Stornierung des Angebots für die Daten ermöglicht, bevor das Angebot angenommen wird.

12. Datenaustauschsystem (20) nach einem der Ansprüche 9 bis 11, wobei mindestens einer der Smart-Contracts (28) kontinuierlich oder periodisch überprüft, ob die ACL der auf den Cloud-Servern (24) gespeicherten Daten mit den Berechtigungen für die in dem Blockchain-Netzwerk (25) gespeicherten Daten übereinstimmt.

13. Computerlesbares Medium, das Anweisungen enthält, die bei Ausführung durch eine Vielzahl von Prozessoren mit Speicherzugriff für die Ausführung eines Verfahrens nach Anspruch 1 sorgen.

## Revendications

1. Procédé d'échange de données en utilisant un réseau de chaîne de blocs (25), le procédé comprenant :
le téléchargement, par une entité informatique productrice de données (21), des données vers une pluralité de serveurs de nuage (24) ;
l'engagement, par l'entité informatique productrice de données (21), des données vers le réseau de chaîne de blocs (25) ;
la création, par l'entité informatique productrice de données (21), d'une offre pour les données sur le réseau de chaîne de blocs (25) ; et
la réception, par l'entité informatique productrice de données (21), d'un paiement (26) à partir d'une entité informatique consommatrice de données (22) après l'acceptation de l'offre par ladite entité informatique consommatrice de données (22),
dans lequel des contrats intelligents (28) sont mis en oeuvre dans le réseau de chaîne de blocs (25) pour vérifier la possession des données, pour régler l'offre contre le paiement (26) et pour changer une liste de commande d'accès, ACL, de sorte que les données sur les serveurs de nuage ( 24) sont accessibles par l'entité informatique consommatrice de données (22),
dans lequel au moins un parmi les contrats intelligents (28), pour vérifier la possession des données, se relie aux serveurs de nuage (24) pour vérifier pour un propriétaire des données, l'ACL des données stockées sur les serveurs de nuage (24) et un hachage des données ; et
dans lequel l'entité informatique productrice de données (21) et l'entité informatique consommatrice de données (22) sont membres du réseau de chaîne de blocs (25).

2. Procédé selon la revendication 1, dans lequel les données téléchargées vers les serveurs de nuage (24) sont cryptées par une transformée en tout ou rien, AONT.

3. Procédé selon la revendication 1 ou 2, dans lequel un ou plusieurs fournisseurs de nuage des serveurs de nuage (24) fonctionnent ou souscrivent à au moins un noeud de chaîne de blocs du réseau de chaîne de blocs (25) de sorte que l'un ou plusieurs fournisseurs de nuage sont notifiés pour effectuer le changement de l'ACL.

4. Procédé selon l'une quelconque des revendications 1 à 3, dans lequel les contrats intelligents (28) sont en outre utilisés pour faciliter la création et l'acceptation de l'offre pour les données.

5. Procédé selon l'une quelconque des revendications 1 à 4, dans lequel au moins un parmi les contrats intelligents (28) spécifie, dans la création de l'offre, une clé publique d'un producteur de données qui a téléchargé les données vers les serveurs de nuage (24), une description des données, un prix des données et une identification d'offre.

6. Procédé selon l'une quelconque des revendications 1 à 5, dans lequel au moins un parmi les contrats intelligents (28) permet l'annulation de l'offre des données avant l'acceptation de l'offre.

7. Procédé selon l'une quelconque des revendications 1 à 6, dans lequel au moins un parmi les contrats intelligents (28) vérifie de manière continue ou périodique que l'ACL des données stockées sur les serveurs de nuage (24) correspond aux permissions pour les données stockées dans le réseau de chaîne de blocs (25).

8. Procédé selon l'une quelconque des revendications 1 à 7, dans lequel le paiement est un paiement par reconnaissance de dette.

9. Système d'échange de données comprenant :
un réseau de chaîne de blocs (25) comprenant une pluralité de noeuds informatiques adaptés pour stocker des données qui ont été engagées vers le réseau de chaîne de blocs (25) par une entité informatique productrice de données (2) adaptée pour également télécharger les données vers une pluralité de serveurs de nuage (24) et adaptée en outre pour créer une offre pour les données sur le réseau de chaîne de blocs ( 25) et pour recevoir un paiement (26) à partir d'une entité informatique consommatrice de données (22) après l'acceptation de l'offre par ladite entité informatique consommatrice de données (22) ;
dans lequel l'entité informatique productrice de données (21) et l'entité informatique consommatrice de données (22) sont membres du réseau de chaîne de blocs (25) ; et
des contrats intelligents (28) mis en oeuvre dans le réseau de chaîne de blocs (25) pour vérifier la possession des données, pour régler l'offre contre le paiement (26) et pour changer une liste de commande d'accès (ACL) de sorte que les données sur les serveurs de nuage (24) sont accessibles par l'entité informatique consommatrice de données (22), dans lequel au moins un parmi les contrats intelligents (28), pour vérifier la possession des données, se relie aux serveurs de nuage (24) pour vérifier pour un propriétaire des données, l'ACL des données stockées sur les serveurs de nuage (24) et un hachage des données.

10. Système d'échange de données (20) selon la revendication 9, dans lequel au moins un parmi les contrats intelligents (28) spécifie, dans la création de l'offre, une clé publique d'une entité informatique productrice de données (21) qui a téléchargé les données vers les serveurs de nuage (24), une description des données, un prix des données et une identification d'offre.

11. Système d'échange de données (20) selon la revendication 9 ou 10, dans lequel au moins un parmi les contrats intelligents (28) permet l'annulation de l'offre pour les données avant l'acceptation de l'offre.

12. Système d'échange de données (20) selon l'une quelconque des revendications 9 à 11, dans lequel au moins un parmi les contrats intelligents (28) vérifie de manière continue ou périodique que l'ACL des données stockées sur les serveurs de nuage (24) correspond aux permissions pour les données stockées dans le réseau de chaîne de blocs (25).

13. Support lisible par ordinateur, non tangible contenant des instructions qui, lors d'une exécution par une pluralité de processeurs ayant accès à la mémoire, fournissent une exécution d'un procédé selon la revendication 1.
